# EUROPÄISCHE PATENTSCHRIFT

(11) **EP 3 583 876 B1**
(45) Veröffentlichungstag und Bekanntmachung des Hinweises auf die Patenterteilung: **23.06.2021**
(21) Anmeldenummer: 19173289.0
(22) Anmeldetag: 08.05.2019
(51) Int. Cl.: A47J 31/44

(54) **KAFFEEMASCHINE UND VERFAHREN ZUR ZUBEREITUNG VON FILTERKAFFEE**
COFFEE MACHINE AND METHOD FOR PREPARING FILTER COFFEE
MACHINE À CAFÉ ET PROCÉDÉ DE PRÉPARATION DE CAFÉ FILTRE

(30) Priorität: 18.06.2018 DE 102018114588
(43) Veröffentlichungstag der Anmeldung: 25.12.2019
(73) Patentinhaber: Melitta Europa GmbH & Co. KG, 32427 Minden (DE)
(72) Erfinder: SACHTLEBEN, Andreas, 32427 Minden (DE); NEUHAUS, Sven, 32549 Bad Oeynhausen (DE)
(74) Vertreter: Dantz, Jan Henning

(56) Entgegenhaltungen:
- DE-A1-102015 121 634
- FR-A1- 2 616 646
- GB-A- 1 456 037
- GB-A- 2 329 825

## Beschreibung

Die vorliegende Erfindung betrifft eine Kaffeemaschine mit einer Einrichtung zur Erzeugung von heißem Wasser, einer Verteilvorrichtung für das heiße Wasser mit einem drehbar gelagerten Auslassteil, das für einen Brühvorgang durch einen Antrieb drehbar ist, und einem unter der Verteilvorrichtung angeordneten Filtergefäß, in das ein Filter und Kaffeemehl einfügbar sind, und ein Verfahren zur Zubereitung von Filterkaffee nach dem Oberbegriff des Anspruches 11.

Die DE 10 2015 121 634 A1 offenbart eine Kaffeemaschine, bei der eine Auslasseinrichtung eine Vielzahl von Auslassöffnungen besitzt, wobei über einen Wahlschalter steuerbar ist, welche Menge an heißem Wasser durch die inneren oder äußeren Auslassöffnungen strömt. Damit wird die Extraktion des Kaffeemehls und damit der Kaffeegeschmack gezielt beeinflusst. Diese statische Einstellung hat den Nachteil, dass die gleichmäßige Befeuchtung und damit die optimale Extraktion nicht immer erreicht werden kann.

In der DE 20 2014 104 028 U1 ist eine Getränkemaschine gezeigt, die einen mehrteiligen Zulauf mit einem Flüssigkeitseinlass aufweist, um Flüssigkeit zu einer Vielzahl von Auslassöffnungen zu leiten. Die Auslassöffnungen sind stationär angeordnet und es kann über ein Stellglied gesteuert werden, welche Auslassöffnungen mit der Flüssigkeit versorgt werden.

Die FR 2 616 646 offenbart eine Kaffeemaschine, bei der eine Verteilvorrichtung für das heiße Wasser ein drehbares Auslassteil aufweist. Durch Drehen des Auslassteils während des Brühvorganges wird somit nicht nur eine punktförmige Fläche sondern ein Ring um eine Drehachse des Auslassteils benetzt.

Manuell zubereiteter Kaffee hat Vorteile, da durch das manuelle Aufbringen des Wassers auf das in der Filtertüte befindliche Kaffeemehl eine vom Nutzer gesteuerte Befeuchtung und eine daraus resultierende gute Extraktion möglich. Auch die Brühdauer kann durch die manuelle beeinflusste Zulaufgeschwindigkeit optimal gesteuert werden. Bei Zubereitung einer größeren Menge Kaffee ist die manuelle Zubereitung jedoch vergleichsweise aufwändig.

Es ist daher Aufgabe der vorliegenden Erfindung, eine Kaffeemaschine und ein Verfahren zur Zubereitung von Filterkaffee bereitzustellen, mit dem die Extraktion optimiert wird, indem die Zufuhr des heißen Wasser auf das Kaffeemehl einer manuellen Zubereitung nachempfunden wird.

Diese Aufgabe wird mit einer Kaffeemaschine mit den Merkmalen des Anspruches 1 und einem Verfahren mit den Merkmalen des Anspruches 11 gelöst.

Die erfindungsgemäße Kaffeemaschine umfasst eine Verteilvorrichtung für das heiße Wasser, die ein drehbar gelagertes Auslassteil mit mindestens zwei Auslassöffnungen aufweist. Das Auslassteil ist für die gleichmäßige Benetzung des Kaffeemehls durch einen Antrieb drehbar gelagert. Dadurch wird das Kaffeemehl nicht durch eine stationäre Wasserzugabe unterhalb einer oder mehrerer Auslassöffnungen benetzt, sondern das Auslassteil wird bewegt, um beim Brühvorgang eine größere Fläche des Kaffeemehls zu benetzen und somit für eine gleichmäßigere Extraktion zu sorgen.

Erfindungsgemäß sind die Auslassöffnungen beabstandet von einer Drehachse des Auslassteils angeordnet. Dadurch wird beim Drehen des Auslassteils eine ringförmige Fläche um die Drehachse für jede Auslassöffnung benetzt.

Für eine gezielte Extraktionssteuerung ist das Auslassteil bevorzugt in entgegengesetzte Richtungen drehbar. Dabei kann eine Schalteinrichtung vorgesehen sein, um je nach Drehrichtung des Auslassteils das heiße Wasser durch unterschiedliche Auslassöffnungen strömen zu lassen. Die Schalteinrichtung kann dabei sowohl elektronisch, elektrisch oder mechanisch ausgebildet sein. Vorzugsweise wird die Drehung des Auslassteils für einen Schaltvorgang genutzt.

An dem Auslassteil ist vorzugsweise zumindest zwischen zwei Auslassöffnungen eine Trennwand vorgesehen. Oberhalb des Auslassteils kann ein Leitelement vorgesehen sein, das das heiße Wasser wahlweise auf eine erste Seite der Trennwand oder eine gegenüberliegende zweite Seite der Trennwand zuführt. Dadurch kann durch eine Relativbewegung des Leitelements zu dem Auslassteil ein Schaltvorgang bewirkt werden, um wahlweise die auf der ersten Seite angeordneten Auslassöffnungen oder die auf der zweiten Seite angeordneten Auslassöffnungen mit heißem Wasser zu versorgen. Das Leitelement kann beispielsweise in einem vorbestimmten Winkelbereich, insbesondere zwischen 20° und 60° relativ zu dem Auslassteil, drehbar ausgebildet sein.

In einer weiteren Ausgestaltung weist das Leitelement eine Auslassöffnung an einem ringförmigen Kanal auf. Die Auslassöffnung versorgt das Auslassteil mit heißem Wasser, wobei die Auslassöffnung an unterschiedlichen Positionen oberhalb des Auslassteils positioniert werden kann.

Bei dem erfindungsgemäßen Verfahren wird heißes Wasser zu einem Auslassteil geleitet, das über mindestens eine Auslassöffnung das heiße Wasser auf Kaffeemehl in einem darunter angeordneten Filtergefäß einleitet und gleichzeitig gedreht wird. Es wird nach einer vorbestimmten Zeitdauer die Drehrichtung des Auslassteils geändert. Dabei leitet das Auslassteil in einer ersten Richtung heißes Wasser durch mindestens eine erste Auslassöffnung und in eine zweite Drehrichtung des Auslassteils heißes Wasser durch mindestens eine zweite Auslassöffnung an dem Auslassteil. Dies ermöglicht eine optimierte Benetzung des Kaffeemehls, ähnlich einem Handbrühvorgang.

Die Erfindung wird nachfolgend anhand eines Ausführungsbeispiels mit Bezug auf die beigefügten Zeichnungen näher erläutert. Es zeigen:

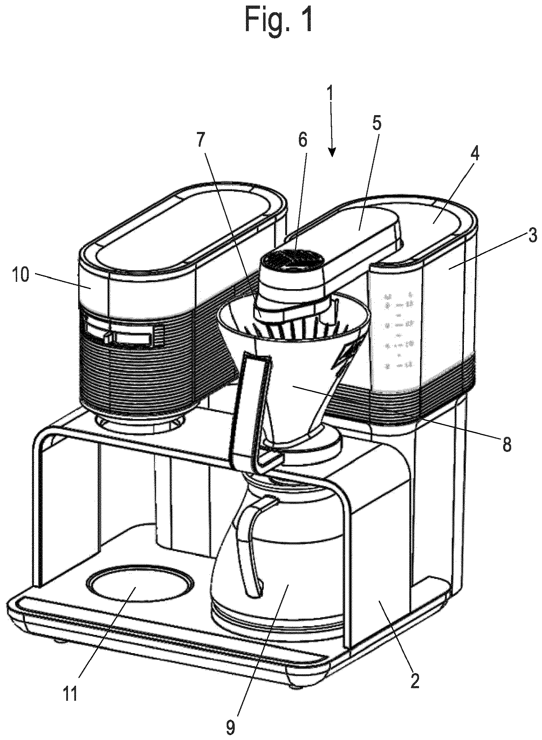

- Figur 1: eine perspektivische Ansicht einer erfindungsgemäßen Kaffeemaschine;

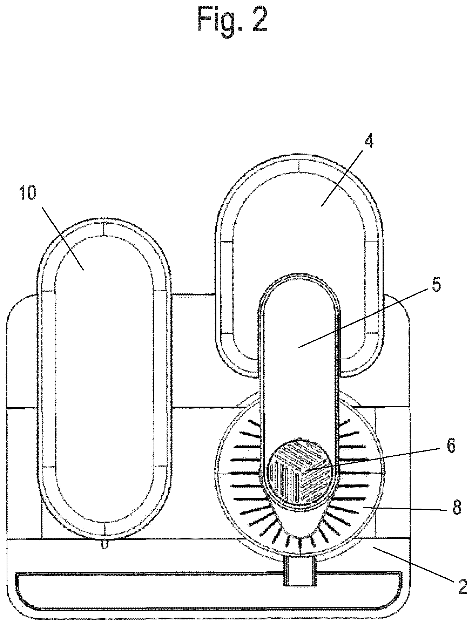

- Figur 2: eine Draufsicht auf die Kaffeemaschine der Figur 1;
- Figuren 3: eine Draufsicht auf den Antrieb der Kaffeemaschine der Figur 1;
- Figuren 4A und 4B: zwei Ansichten des Bereichs der Wasserzuführung der Kaffeemaschine der Figur 1;
- Figuren 5 bis 7: mehrere Schnittansichten durch den Bereich der Wasserzuführung der Kaffeemaschine der Figur 1;
- Figuren 8A und 8B: zwei Ansichten eines Lagerrings für das Auslassteil der Kaffeemaschine der Figur 1;
- Figuren 9A bis 9C: mehrere Ansichten eines Leitelementes für heißes Wasser für die Kaffeemaschine der Figur 1;
- Figur 10: eine Ansicht auf das Auslassteil zur Zuführung von heißem Wasser;
- Figuren 11A und 11B: zwei Ansichten auf das Auslassteil mit dem Auslassstutzen in unterschiedlichen Positionen;
- Figuren 12A und 12B: zwei Ansichten auf das Auslassteil mit dem Auslassstutzen in unterschiedlichen Positionen, und
- Figuren 13A und 13B: zwei Ansichten der Wasserzufuhr der Kaffeemaschine mit dem Auslassteil in unterschiedlichen Positionen.

Eine Kaffeemaschine 1 umfasst ein Gehäuse 2, an dem ein Tank 3 für Wasser vorgesehen ist. Der Tank 3 ist über einen abnehmbaren Deckel 4 verschlossen und kann mit Wasser befüllt werden. Die Kaffeemaschine 1 weist eine Pumpe und eine Heizeinrichtung auf, um heißes Wasser zu erzeugen, das über eine Zuleitung 5 einem Auslassteil 7 zugeführt wird. Das Auslassteil 7 befindet sich oberhalb eines Filtergefäßes 8, das insbesondere kegelstumpfförmig ausgebildet ist und zur Aufnahme eines Filterpapiereinsatzes mit Kaffeemehl geeignet ist. Das Filtergefäß 8 ist abnehmbar an dem Gehäuse 2 der Kaffeemaschine 1 montiert und oberhalb eines Gefäßes 9, beispielsweise einer Thermoskanne oder eine Glaskanne für gebrühten Kaffee, angeordnet.

Die Kaffeemaschine 1 weist optional noch ein Mahlwerk 10 auf, an dem Kaffeebohnen frisch gemahlen werden und einem Gefäß an einer Aufnahme 11 zugeführt werden, so dass das frisch gemahlene Kaffeemehl in einen Filterpapiereinsatz an dem Filtergefäß 8 eingegeben werden kann.

Das Auslassteil 7 ist relativ zu der Zuleitung 5 drehbar angeordnet und kann daher heißes Wasser während einer Drehbewegung dem Kaffeemehl zuführen. An der Oberseite der Zuleitung 5 ist ferner ein Entlüftungsdeckel 6 vorgesehen, der Öffnungen für das Belüften der Zuleitung 5 aufweist.

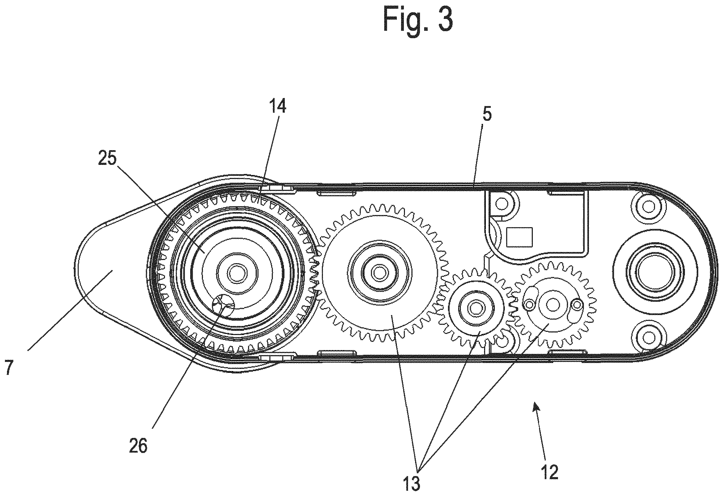

In Figur 3 sind das Auslassteil 7 mit einem Antrieb 12 gezeigt, der beispielsweise einen Elektromotor aufweist. Der Antrieb 12 umfasst eine Vielzahl von Zahnrädern 13, die ein Getriebe ausbilden, wobei die Anzahl der Zahnräder je nach Gestaltung der Zuleitung 5 gewählt werden können. Die Zahnräder 13 des Getriebes können einen Zahnkranz 14 antreiben, der mittelbar mit dem Auslassteil 7 gekoppelt ist, um das Auslassteil 7 zu drehen. Das Auslassteil 7 kann dabei in gegenläufige Richtungen gedreht werden.

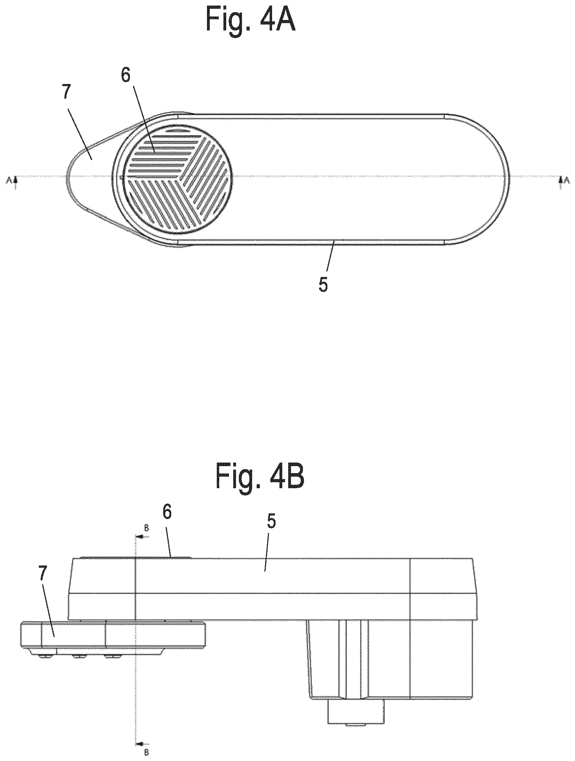

In den Figuren 4A und 4B ist der Bereich der Zuleitung 5 mit dem Entlüftungsdeckel und dem Auslassteil 7 von außen gezeigt. An der Zuleitung 5 ist ein Zufluss vorgesehen, von dem das heiße Waser von einer Pumpe und einer Heizeinrichtung in einen Kanal 18 der Zuleitung 5 zugeführt wird, der oberhalb des Getriebes angeordnet ist und leicht abfallend geneigt zu dem Auslassteil 7 ausgerichtet ist.

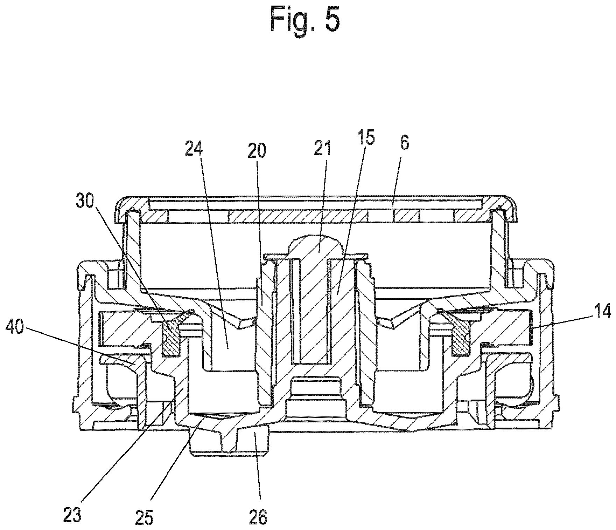

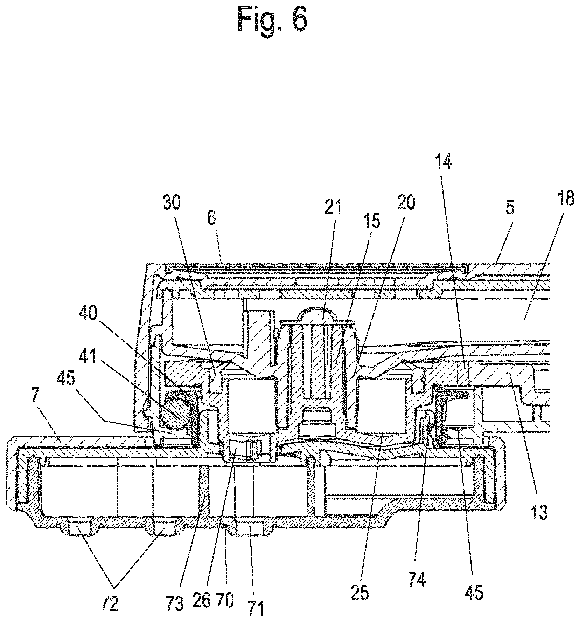

In den Schnittansichten der Figuren 5 bis 7 ist gezeigt, dass ein Zahnrad 13 einen Zahnkranz 14 antreibt, der integral mit einem Leitelement 23 ausgebildet ist, das eine ringförmige Aufnahme 25 aufweist. An dem Leitelement 23 ist eine innere Achse 15 vorgesehen, in die zur axialen Sicherung eine Schraube 21 eingedreht ist. Die Schraube 21 übergreift mit einem radial hervorstehenden Flanschabschnitt eine Innenhülse 20, die stationär angeordnet ist. Das heiße Wasser wird über Auslassöffnungen 24 in die ringförmige Aufnahme 25 des Leitelementes 23 eingeleitet, das sich durch den Antrieb dreht. Von der ringförmigen Aufnahme 25 strömt das heiße Wasser durch eine Öffnung an einem Auslassstutzen 26 ab, der nach unten von der Aufnahme 25 hervorsteht. An dem Leitelement 23 ist ferner eine Dichtung 30 vorgesehen, die mit einer Dichtlippe für eine Abdichtung zwischen dem Leitelement 23 und einem Gehäuseabschnitt der Kaffeemaschine sorgt.

Das Auslassteil 7 ist über Rastmittel, insbesondere nach oben ragende Raststege 74 an einem drehbaren Lagerring 40 gehalten. Der Lagerring 40 wird über kugelförmige Wälzkörper 41 drehbar an dem Gehäuse 2 gelagert, wobei die Wälzkörper 41 auf einer ringförmigen Laufbahn 45 abrollen und den Lagerring 40 abstützen. An dem sich leichtgängig relativ zu dem Gehäuse 2 drehenden Lagerring 40 ist das Auslassteil 7 drehfest gehalten. Der Lagerring 40 ist dabei winkelförmig ausgebildet und übergreift mit einem Schenkel die Wälzkörper 41 und weist einen vertikalen Schenkel auf, an dem das Auslassteil 7 gehalten ist. Das Auslassteil 7 weist an einem Boden 70 eine innere Auslassöffnung 71 und zwei äußere Auslassöffnungen 72 auf, die über eine Trennwand 73 voneinander getrennt sind. An einem Oberteil 76 des Auslassteils 7 ist eine bogenförmige Öffnung 32 ausgebildet, in die der Auslassstutzen 26 hineinragt. An dem Oberteil 76 sind ferner Befestigungsmittel ausgebildet, die an dem Lagerring 40 fixiert sind.

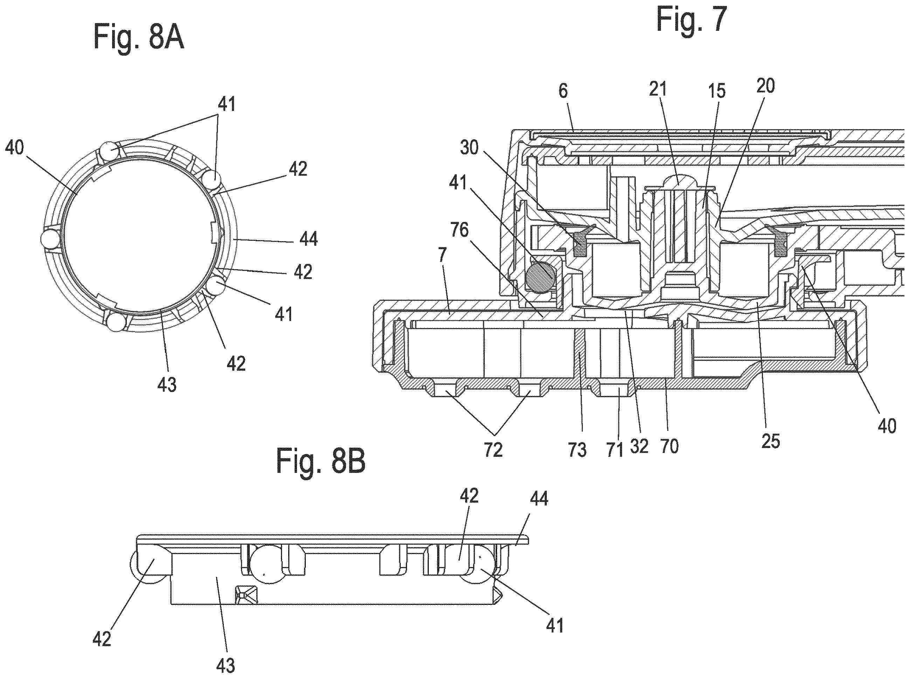

In den Figuren 8A und 8B ist der Lagerring 40 im Detail dargestellt. Der Lagerring ist im Schnitt winkelförmig ausgebildet und weist einen oberen Flansch 44 auf, der auf den Wälzkörpern 41 abgestützt ist. Ferner ist ein vertikaler Innenring 43 vorgesehen, an dem das Auslassteil 7 gehalten ist. Jeder Wälzkörper 41 ist durch zwei stegförmige Mitnehmer 42 geführt, so dass der Abstand der Wälzkörper 41 im Wesentlichen konstant bleibt.

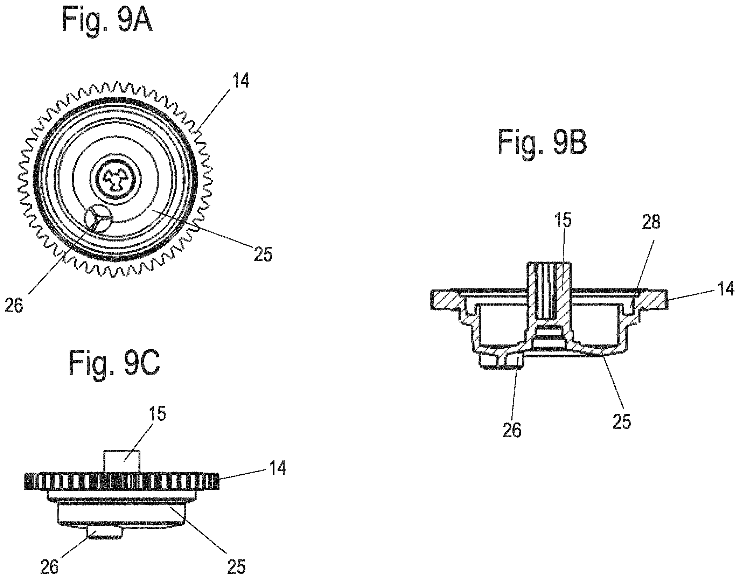

In den Figuren 9A bis 9C ist das Leitelement 23 im Detail dargestellt. Das Leitelement umfasst die ringförmige Aufnahme 25, an der der Auslassstutzen 26 ausgebildet ist. An einem äußeren Umfang ist ein integral ausgebildeter Zahnkranz 14 vorgesehen.

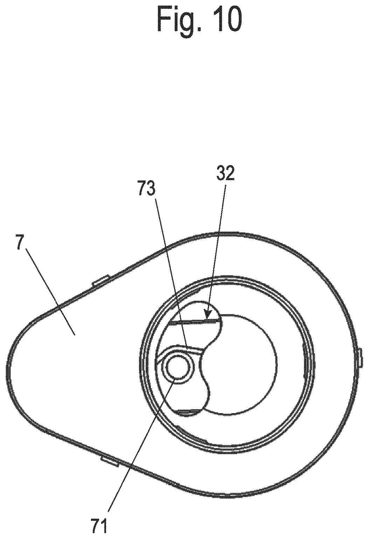

In Figur 10 ist eine Draufsicht auf das Auslassteil 7 gezeigt, das an seiner Oberseite eine bogenförmige Öffnung 32 besitzt, unterhalb der die innere Auslassöffnung 71 sichtbar ist. Der Auslassstutzen 26 kann innerhalb der bogenförmigen Öffnung 32 wahlweise auf einer ersten Seite der Trennwand 73 oder einer zweiten Seite der Trennwand 73 angeordnet werden, um wahlweise die innere Auslassöffnung 71 oder die äußeren Auslassöffnungen 72 mit heißem Wasser zu versorgen.

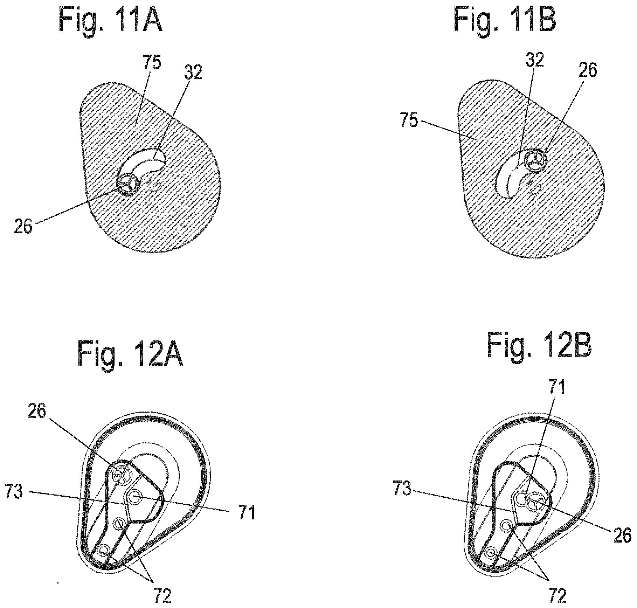

In den Figuren 11A und 12A ist der Auslassstutzen 26 so angeordnet, dass die beiden äußeren Auslassöffnungen 72 mit heißem Wasser versorgt werden. Ändert sich die Drehrichtung des Motors, wird der Auslassstutzen 26 entlang der bogenförmigen Öffnung 32 verschwenkt, um dann das Auslassteil 7 in die andere Drehrichtung mitzunehmen. Damit bewegt sich der Auslassstutzen 26 relativ zu dem Auslassteil 7 und ist auf der gegenüberliegenden Seite der Trennwand 73 angeordnet, so dass die innere Auslassöffnung 71 nun mit heißem Wasser versorgt wird (Figuren 11B und 12B).

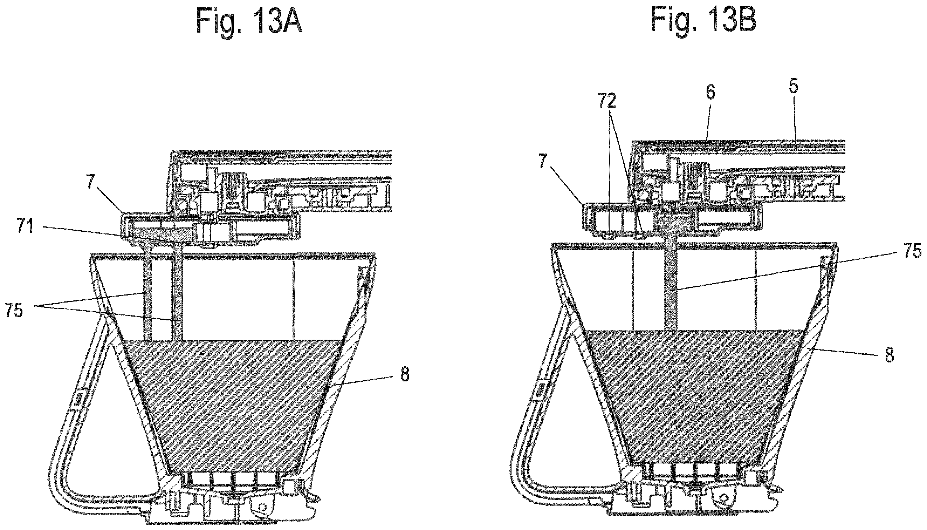

Dieser Umschaltvorgang ist noch einmal schematisch in den Figuren 13A und 13B gezeigt. Wahlweise werden die beiden äußeren Auslassöffnungen 72 mit heißem Wasser versorgt, die dann ringförmig auf das im Filtergefäß 8 enthaltene Kaffeemehl heißes Wasser abgeben, oder die innere Auslassöffnung 71 wird mit heißem Wasser versorgt, die dann ebenfalls ringförmig heißes Wasser auf das Kaffeemehl abgibt.

In dem dargestellten Ausführungsbeispiel umfasst das Auslassteil 7 drei Auslassöffnungen 71 und 72. Es ist natürlich möglich, die Anzahl der Auslassöffnungen 71 und 72 zu variieren, und auch die Form zu verändern, da diese beispielsweise auch schlitzförmig ausgebildet sein können.

Zudem können andere Mechaniken eingesetzt werden, um bei einem Wechsel der Drehrichtung dafür zu sorgen, dass verschiedene Auslassöffnungen mit heißem Wasser versorgt werden.

Der Wechsel der Drehrichtung kann beispielsweise in Intervallen zwischen 10 s und 1 min stattfinden, so dass nach dem Brühen eines bestimmten Bereiches zunächst eine Pause eingelegt wird, in der sich das übergossene Kaffeemehl wieder setzen kann. Für ein gleichmäßiges Benetzen des Kaffeemehls haben sich Intervalle zwischen 15 s und 25 s bewährt.

### Bezugszeichenliste

- 1: Kaffeemaschine
- 2: Gehäuse
- 3: Tank
- 4: Deckel
- 5: Zuleitung
- 6: Entlüftungsdeckel
- 7: Auslassteil
- 8: Filtergefäß
- 9: Gefäß
- 10: Mahlwerk
- 11: Aufnahme
- 12: Antrieb
- 13: Zahnrad
- 14: Zahnkranz
- 15: Achse
- 18: Kanal
- 20: Innenhülse
- 21: Schraube
- 23: Leitelement
- 24: Auslassöffnung
- 25: Aufnahme
- 26: Auslassstutzen
- 30: Dichtung
- 32: Öffnung
- 40: Lagerring
- 41: Wälzkörper
- 42: Mitnehmer
- 43: Innenring
- 44: Flansch
- 45: Laufbahn
- 70: Boden
- 71: Auslassöffnung
- 72: Auslassöffnung
- 73: Trennwand
- 74: Raststeg
- 75: Wasserstrahl
- 76: Oberteil

## Patentansprüche

1. Kaffeemaschine (1) mit einer Einrichtung zur Erzeugung von heißem Wasser, einer Verteilvorrichtung für das heiße Wasser mit einem drehbar gelagerten Auslassteil (7), das für einen Brühvorgang durch einen Antrieb (12) drehbar ist, und einem unter der Verteilvorrichtung angeordneten Filtergefäß (8), in das ein Filter und Kaffeemehl einfügbar sind, **dadurch gekennzeichnet, dass** das drehbar gelagertes Auslassteil (7) mindestens zwei Auslassöffnungen (71, 72) aufweist, die beabstandet von einer Drehachse des Auslassteils (7) angeordnet sind, wobei beim Drehen des Auslassteils (7) eine ringförmige Fläche um die Drehachse für jede Auslassöffnung (71, 72) benetzbar ist.

2. Kaffeemaschine nach Anspruch 1, **dadurch gekennzeichnet, dass** das Auslassteil (7) durch den Antrieb (12) in entgegengesetzte Richtungen drehbar ist.

3. Kaffeemaschine nach Anspruch 1 oder 2, **dadurch gekennzeichnet, dass** eine Schalteinrichtung vorgesehen ist, um je nach Drehrichtung des Auslassteils (7) das heiße Wasser durch unterschiedliche Auslassöffnungen (71, 72) strömen zu lassen.

4. Kaffeemaschine nach einem der vorhergehenden Ansprüche, **dadurch gekennzeichnet, dass** zumindest zwischen zwei Auslassöffnungen (71, 72) an dem Auslassteil eine Trennwand (73) vorgesehen ist.

5. Kaffeemaschine nach Anspruch 4, **dadurch gekennzeichnet, dass** oberhalb des Auslassteils (7) ein Leitelement (23) vorgesehen ist, das das heiße Wasser wahlweise auf einer Seite der Trennwand (73) oder auf einer gegenüberliegenden zweiten Seite der Trennwand (73) zuführt.

6. Kaffeemaschine nach einem der vorhergehenden Ansprüche, **dadurch gekennzeichnet, dass** ein Leitelement (23) relativ zu dem Auslassteil (7) in einem vorbestimmten Winkelbereich drehbar ist.

7. Kaffeemaschine nach einem der Ansprüche 4 bis 6, **dadurch gekennzeichnet, dass** das Leitelement (23) eine Auslassöffnung (26) an einem ringförmigen Kanal (25) aufweist.

8. Kaffeemaschine nach Anspruch 7, **dadurch gekennzeichnet, dass** die Auslassöffnung (26) an einem Stutzen ausgebildet ist, der in eine gebogene Öffnung (32) eingreift, und über den Stutzen das Auslassteil (7) drehbar ist.

9. Kaffeemaschine nach einem der vorhergehenden Ansprüche, **dadurch gekennzeichnet, dass** das Auslassteil (7) über mehrere Wälzkörper (41) an einem Lagerring (40) drehbar gehalten ist.

10. Kaffeemaschine nach Anspruch 9, **dadurch gekennzeichnet, dass** das Auslassteil (7) über eine Rastverbindung an dem Lagerring (40) gehalten ist.

11. Verfahren zur Zubereitung von Filterkaffee, mit den folgenden Schritten:
- Erzeugen von heißem Wasser und Zuleiten des heißen Wassers zu einer Verteilvorrichtung mit einem Auslassteil (7), und
- Drehen des Auslassteils (7) und gleichzeitiges Ausgeben von heißem Wasser über mindestens eine Auslassöffnung (71, 72) auf Kaffeemehl in einem Filtergefäß (8) unterhalb des Auslassteils (7),
**dadurch gekennzeichnet, dass** nach einer vorbestimmten Zeitdauer die Drehrichtung des Auslassteils (7) geändert wird und in einer ersten Drehrichtung des Auslassteils (7) heißes Wasser durch mindestens eine erste Auslassöffnung (71) an dem Auslassteil (7) geleitet wird und in eine zweite Drehrichtung des Auslassteils (7) heißes Wasser durch mindestens eine zweite Auslassöffnung (72) durch das Auslassteil (7) geleitet wird.

## Claims

1. Coffee machine (1) with a device a producing hot water, a distributing device for the hot water with a rotatably mounted outlet part (7), which is rotatable by a drive (12) for a brewing process, and a filter vessel (8), which is arranged under the distributing device and into which a filter and coffee grinds are introducible, **characterised in that** the rotatably mounted outlet part (7) has at least two outlet openings (71, 72), which are arranged at a spacing from an axis of rotation of the outlet part (7), wherein on rotation of the outlet part (7) an annular area around the axis of rotation for each outlet opening (71, 72) is wettable.

2. Coffee machine according to claim 1, **characterised in that** the outlet part (7) is rotatable by the drive (12) in opposite directions.

3. Coffee machine according to claim 1 or 2, **characterised in that** a switching device to allow the hot water to be flow through different outlet openings (71, 72) depending on the respective direction of rotation of the outlet part (7) is provided.

4. Coffee machine according to any one of the preceding claims, **characterised in that** a partition wall (73) is provided at least between two outlet openings (71, 72) at the outlet part.

5. Coffee machine according to claim 4, **characterised in that** a guide element (23) which feeds the hot water selectably to one side of the partition wall (73) or to an opposite, second side of the partition wall (73) is provided above the outlet part (7).

6. Coffee machine according to any one of the preceding claims, **characterised in that** a guide element (23) is rotatable relative to the outlet part (7) in a predetermined angular range.

7. Coffee machine according to any one of claims 4 to 6, **characterised in that** the guide element (23) has an outlet opening (26) at an annular channel (25).

8. Coffee machine according to claim 7, **characterised in that** the outlet opening (26) is formed at a stub pipe which is engaged in a curved opening (32), the outlet part (7) being rotatable by way of the stub pipe.

9. Coffee machine according to any one of the preceding claims, **characterised in that** the outlet part (7) is rotatably mounted at a bearing ring (40) by way of a plurality of roller bodies (41).

10. Coffee machine according to claim 9, **characterised in that** the outlet part (7) is mounted on the bearing ring (40) by way of detent connection.

11. Method of preparing filter coffee, with the following steps:
- producing hot water and conducting the hot water to a distributing device with an outlet part (7), and
- rotating the outlet part (7) and simultaneously delivering hot water by way of at least one outlet opening (71, 72) onto coffee grinds in a filter vessel (8) below the outlet part (7),
**characterised in that** after a predetermined period of time the rotational direction of the outlet part (7) is changed and in a first direction of rotation of the outlet part (7) hot water is conducted through at least one first outlet opening (71) at the outlet part (7) and in a second direction of rotation of the outlet part (7) hot water is conducted through at least one second outlet opening (72) through the outlet part (7).

## Revendications

1. Machine à café (1) comprenant une installation pour produire de l'eau chaude, un dispositif de répartition de l'eau chaude avec une pièce de sortie (7) montée à rotation, et entraînée en rotation par un entraînement (12) pour une opération d'infusion et une sortie de filtre (8) sous le dispositif distributeur, qui reçoit un filtre et la poudre de café,
machine à café **caractérisée en ce que**
la pièce de sortie (7) montée à rotation a au moins deux orifices de sortie (71, 72) écartés de l'axe de rotation de la pièce de sortie (7), et pendant la rotation de la pièce de sortie (7), une surface annulaire autour de l'axe de rotation peut être mouillée pour chaque orifice de sortie (71, 72).

2. Machine à café selon la revendication 1,
**caractérisée en ce que**
l'entraînement (12) peut faire tourner la pièce de sortie (7) dans des directions opposées.

3. Machine à café selon la revendication 1 ou 2,
**caractérisée en ce qu'**elle comporte
une installation de commutation pour qu'après chaque rotation de la pièce de sortie (7), l'eau chaude traverse des orifices de sortie (71, 72) différents.

4. Machine à café selon l'une des revendications précédentes,
**caractérisée par**
une cloison (73) entre au moins deux orifices de sortie (71, 72) de la pièce de sortie.

5. Machine à café selon la revendication 4,
**caractérisée par**
un élément de guidage (23) au-dessus de la pièce de sortie (7) qui guide l'eau chaude, au choix sur un côté de la cloison (73) ou sur l'autre côté de la cloison (73) opposé au précédent.

6. Machine à café selon l'une des revendications précédentes,
**caractérisée en ce que**
l'élément de guidage (23) peut tourner par rapport à la pièce de sortie (7) dans une plage angulaire prédéfinie.

7. Machine à café selon l'une des revendications 4 à 6,
**caractérisée en ce que**
l'élément de guidage (23) comporte un orifice de sortie (26) dans un canal annulaire (25).

8. Machine à café selon la revendication 7,
**caractérisée en ce que**
l'orifice de sortie (26) est réalisé sur un embout qui pénètre dans une ouverture courbe (32) et la pièce de sortie (7) est entraînée en rotation par l'embout.

9. Machine à café selon l'une des revendications précédentes,
**caractérisée en ce que**
la pièce de sortie (7) est montée à rotation sur plusieurs organes de roulement (41) dans une couronne de palier (40).

10. Machine à café selon la revendication 9,
**caractérisée en ce que**
la pièce de sortie (7) est tenue contre la bague de palier (40) par une liaison par enclipsage.

11. Procédé de préparation de café filtre comprenant les étapes suivantes consistant à :
- produire de l'eau chaude et fournir cette eau chaude à un dispositif distributeur avec une pièce de sortie (7), et
- tourner la pièce de sortie (7) et distribuer en même temps l'eau chaude par au moins un orifice de sortie (71, 72) pour la poudre de café dans un récipient à filtre (8) sous la pièce de sortie (7),
procédé **caractérisé en ce que**
après une durée prédéfinie, on change le sens de rotation de la pièce de sortie (7) et on conduit de l'eau chaude dans au moins une première direction de rotation de la pièce de sortie (7) par au moins un premier orifice de sortie (71) de la pièce de sortie (7) et dans un second sens de rotation de la pièce de sortie (7) on conduit de l'eau chaude par au moins un second orifice de sortie (72) à travers la pièce de sortie (7).
